# NEUE EUROPÄISCHE PATENTSCHRIFT

(11) **EP 1 321 708 B2**
(45) Veröffentlichungstag und Bekanntmachung des Hinweises auf die Entscheidung über den Einspruch: **23.10.2013**
(45) Hinweis auf die Patenterteilung: 02.04.2008
(21) Anmeldenummer: 02028286.9
(22) Anmeldetag: 17.12.2002
(51) Int. Cl.: F22B 1/28, F22B 37/12, A47J 31/54

(54) **Vorrichtung zum Erhitzen einer Flüssigkeit**
Device for heating a liquid
Dispositif pour chauffer un liquide

(30) Priorität: 20.12.2001 DE 20120611 U
(43) Veröffentlichungstag der Anmeldung: 25.06.2003
(60) Teilanmeldung: 07022436.5
(73) Patentinhaber: Eichenauer Heizelemente GmbH & Co. KG, 76870 Kandel (DE)
(72) Erfinder: Kitt, Rudi, 76863 Herxheim-Hayna (DE); Kornisch, Fridolin, 76865 Rohrbach (DE); Höfer, Edwin, 76756 Bellheim (DE)
(74) Vertreter: Lempert, Jost

(56) Entgegenhaltungen:
- DE-A- 1 139 589
- DE-A- 2 652 656
- DE-A- 3 320 474
- DE-A1- 2 339 096
- DE-C- 4 212 074
- DE-C- 4 226 325
- DE-C2- 3 221 348
- DE-U- 1 905 694
- DE-U- 1 975 794
- DE-U- 8 529 085
- DE-U- 8 906 033
- DE-U- 20 020 347
- DE-U- 20 021 754
- DE-U1- 9 218 448
- FR-A- 745 341
- US-A- 1 509 042

## Beschreibung

Die Erfindung betrifft ein Heizsystem zum Erhitzen einer - Flüssigkeit mit mindestens einem flüssigkeitsführendem Rohr oder Dampfrohr und einer gut wärmeleitend mit diesem verbundenen elektrischen Heizvorrichtung gemäß dem Oberbegriff des Anspruchs 1.

Ein solches Heizsystem ist aus Dokument DE-U-19 75 794 schon bekannt.

Das Erhitzen der Flüssigkeit kann bis zu einer gewünschten Temperatur unterhalb des Siedepunktes desselben, oder zur Dampferzeugung bis oberhalb des Siedepunktes erfolgen. Dampferzeuger finden insbesondere in Dampfsaugern ihre Anwendung. Die Funktionsweise eines solchen Gerätes ist beispielsweise in der EP 0 684 006 näher erläutert. Denkbar sind jedoch auch andere Anwendungsgebiete, wie beispielsweise in Espressomaschinen, Bügeleisen oder ähnlichen dampfbetriebenen Haushaltsgeräten.

Zu diesem Zweck sind Heizsysteme für Dampferzeuger bekannt, die als Druckgussteil hergestellt sind. Dabei ist das Druckgussteil so ausgestaltet, dass zwischen einer äußeren und einer inneren Zylinderwand aus Aluminium ein Stahlheizkörper wendelartig geführt und eingegossen ist. An einer Stirnseite der Zylinderanordnung sind zwei Öffnungen für den Wassereinlass und den Dampfaustritt vorgesehen. Der gebildete Topf ist innen durch eine in Richtung der Zylinderachse verlaufende Zwischenwand in zwei Kammern geteilt. Die Zwischenwand ist dabei so angeordnet, dass die eine Kammer mit der Wassereinlassöffnung und die andere Kammer mit der Dampfaustrittsöffnung in Verbindung steht. Die Zwischenwand endet an dem den Öffnungen gegenüberliegenden Ende der Anordnung einige Millimeter vor Erreichen der durch den äußeren Rand der Zylinderwand aufgespannten kreisförmigen Ebene.

Verschlossen ist die den Öffnungen gegenüberliegende Stirnseite mit einem Deckel unter Zwischenlage zweier O-Ringe, so dass aufgrund der Belassung eines Spalts zwischen Zwischenwand und Deckel ein Durchlass von der einen Kammer zur anderen Kammer geschaffen ist. Dabei wird eine Schraube in eine an die Zwischenwand angeformte Gewindeführung eingedreht und der Deckel zusätzlich noch mit der Zylinderaußenwand verstemmt.

Nachteilig ist der hohe Material- und Fertigungsaufwand, der entsprechend hohe Stückkosten zur Folge hat.

Bekannt sind des weiteren Durchlauferhitzer beispielsweise aus Kaffeemaschinen, bei denen ein Heizkörper mit einem Durchflussrohr verlötet wird. Hierbei trachtet man jedoch, die Dampferzeugung durch das Vorsehen einer kleinen Kontaktfläche zwischen Heizkörper und Durchflussrohr und durch die damit verbundene allmähliche Erwärmung von Wasser über eine längere Strecke gerade zu vermeiden, da eine schnelle Dampferzeugung zu viel kaltes Wasser mit sich reißen und die Brühtemperatur absenken würde.

Aus der DE 199 45 577 ist weiterhin ein Durchlauferhitzer für eine Espressomaschine bekannt. Auch hier ist ein Heizkörper aus Aluminium mit einem Durchflussrohr aus Aluminium verlötet. Im Gegensatz zum vorstehend beschriebenen Durchlauferhitzer einer Kaffeemaschine wird hier zwar Dampf erzeugt, jedoch bedingt durch die geringe Leistung des Heizkörpers nicht in einer Menge und nicht mit einem Druck, wie sie bei einer Anwendung in Dampfsaugern erforderlich sind.

Eine einfache Erhöhung der Heizleistung würde zu einer Überhitzung des Heizkörpers führen. Darüber hinaus ist ein Durchflussrohr in einer bei Espressomaschinen verwendeten Länge in einem Dampfsauger nicht unterzubringen.

Wie aus der DE-OS 22 18 796 bekannt ist, können Durchlauferhitzer auch als einstückige Strangpressprofile ausgeführt sein. Für die dort gezeigten Ausführungsformen ergeben sich die vorstehend aufgezeigten Nachteile in gleicher Weise.
Weitere relevante Schriften sind die DE 92 18 448 U1 und die DE 19 05 418 C1.

Der Erfindung liegt daher die Aufgabe zugrunde, unter Vermeidung der angesprochenen Nachteile eine Vorrichtung zum Erhitzen von Flüssigkeit zu schaffen, der wesentlich einfacher und kostengünstiger herzustellen ist als entsprechende bekannte Vorrichtungen, und der dazu bei hoher Heizleistung in einem begrenzten zur Verfügung stehenden Raum unterbringbar ist.

Diese Aufgabe wird erfindungsgemäß durch eine Vorrichtung gemäß Anspruch 1 gelöst.

Die Heizkörper selbst sind nach einer bevorzugten Ausgestaltung als Rohr-Heizkörper ausgebildet. Das flüssigkeitsführende Rohr besteht vorzugsweise aus Edelstahl, kann aber auch aus anderem Metall wie Aluminium oder Aluminiumlegierung bestehen. Edelstahl hat den Vorteil, dass Kalkablagerungen aufgrund der Temperaturänderungen wieder abplatzen uns so fortgeschwemmt werden können. Die Heizkörper bestehen vorzugsweise aus Aluminium oder einer Aluminiumlegierung, da solche Materialien die erforderlichen günstigen Wärmeleiteigenschaften aufweisen. Rohr und Heizkörper stehen längsseitig in direkter wärmeleitender Verbindung miteinander, wobei aufgrund der konturenangepassten Kontaktflächen von Heizkörpern und Dampfrohr eine möglichst große Wärmeübergangsfläche geschaffen ist.

Es ist vorgesehen, dass das Verhältnis von beheizten Umfang zum gesamten Umfang des wasserführenden Rohres oder Dampfrohres größer als 0,6 vorzugsweise größer als 0,7 ist. Auch kann in weiterer oder alternaiver Weise vorgesehen sein, dass das Verhältnis des beheizten Umfanges in mm zur Querschnittsfläche in mm² des wasserführenden Rohres größer als 0,4 äußerst vorzugsweise größer als 0,5 ist.

Eine weitere bevorzugte Ausgestaltung der Erfindung sieht vor, dass die spezifische Längenheizleistung größer 10 W/mm vorzugsweise größer 19 W/mm ist. Letzteres gilt insbesondere bei einem wasserführendem Rohr oder Dampfrohr aus Edelstahl.

Durch die erfindungsgemäße große Wärmeübergangsfläche kann eine große Wärmemenge auf ein relativ kleines zu beheizendes Volumen übertragen werden und damit eine schnelle Aufheizzeit erreicht werden.

In bevorzugter Ausgestaltung kann ein im Querschnitt rundes Aluminiumrohr im Abschnitt des Kontaktes mit den Heizkörpern so abgeflacht sein, dass ebene Kontaktflächen entstehen. Bei Verwendung von zwei Heizkörpern entsteht so ein Flachrohr als medienführendes Rohr mit zwei geraden, parallelen Seitenwänden. Alternative Ausgestaltungen der Erfindung sehen die Verwendung von drei oder vier gemeinsam mit einem flüssigkeitsführenden Rohr oder Dampfrohr verbundenen Heizkörpern vor. Bei Verwendung von drei Heizkörpern entsteht so ein medienführendes Rohr mit im wesentlichen dreieckigen Querschnitt, bei vier Heizkörpern weist das Dampfrohr oder flüssigkeitsführende Rohr teilweise einen rechteckförmigen Querschnitt auf.

Durch die Verwendung von mindestens zwei direkt mit dem Dampfrohr oder flüssigkeitsführende Rohr verbundenen Heizkörpern ist es aufgrund der deutlich vergrößerten Wärmeübergangsfläche im Gegensatz zu den zum Stand der Technik zu rechnenden Heizsystemen möglich, eine vergrößerte Gesamtheizleistung vorzusehen und damit das Wasser im Dampfrohr auf kurzer Strecke so stark zu erhitzen, dass es in den dampfförmigen Zustand übergeht. Dabei ist es möglich, Heizleistungen von 1 kW und mehr pro 100 mm Rohrlänge zu übertragen.

Zur Verbesserung der Heizleistung ist nach einer äußerst bevorzugter Ausgestaltung vorgesehen, die Wärmeabgabefläche durch innerhalb des Dampfrohres oder flüssigkeitsführenden Rohres vorgesehene Zwischenwandungen noch zu erhöhen. Nach einer weiteren bevorzugten Ausgestaltung ist das Dampfrohr oder flüssigkeitsführende Rohr zwecks einer konstruktiv einfachen Schaffung einer solchen Geometrie als Strangpressprofil ausgebildet.

Um die Heizrohre effektiv und über eine möglichst große Fläche mit dem Dampfrohr oder flüssigkeitsführende in Kontakt bringen zu können, ist nach einer weiteren bevorzugten Ausgestaltung des erfindungsgemäßen Gegenstands vorgesehen, dass die Heizkörper zumindest im Bereich der Kontaktflächen einen trapezförmigen Querschnitt aufweisen. Bevorzugterweise ist dabei die längere der beiden Grundlinien des trapezförmigen Querschnitts mit dem Dampfrohr oder flüssigkeitsführendem Rohr verbunden.

Da gerade bei einem Flachrohr aufgrund der geringen Höhe des Querschnitts Probleme durch Kalkablagerungen auftreten können, die den Querschnitt noch zusätzlich verengen, ist zur Dampferzeugung bevorzugt kalkfreies oder kalkarmes Wasser einzusetzen. Dies kann durch Verwendung eines Filters, beispielsweise in Form einer vor dem Dampfrohr oder dem flüssigkeitsführenden Rohr angeordneten Filterkartusche erreicht werden. Zusätzlich oder alternativ kann das Dampfrohr oder flüssigkeitsführenden Rohr eine geeignete Innenbeschichtung, wie aus PTFE aufweisen.

Um die Temperatur des erfindungsgemäßen Heizsystems effektiv überwachen und im Falle einer Überhitzung das Gerät abschalten zu können, ist nach einer äußerst bevorzugten Ausgestaltung vorgesehen, im Bereich der Kontaktierung von Heizkörpern und Dampfrohr mindestens eine Lasche aus gut wärmeleitendem Material, vorzugsweise aus Aluminium oder einer Aluminiumlegierung anzubringen. Nach einer bevorzugten Ausgestaltung der Erfindung ist die Lasche mit den Heizkörpern und/oder dem Dampfrohr bzw. dem flüssigkeitsführenden Rohr verlötet oder verschweißt (punktgeschweißt), um einen guten Wärmeübergang bei gleichzeitiger mechanischer Stabilität auf einfache Weise zu gewährleisten. An der Lasche ist vorzugsweise ein Temperaturregler befestigt.

Die Beschaltung der Heizkörper kann an die jeweiligen baulichen Gegebenheiten des das Heizsystem aufnehmenden Gerätes (Art der Spannungsversorgung, Typ und Größe der Spannungsquelle, etc.) angepasst werden. Bevorzugte Ausgestaltungen der Erfindung sehen eine Reihen- oder Parallelschaltung der Heizkörper vor. Nach einer äußerst bevorzugten Ausgestaltung erlaubt die Beschaltung dem Benutzer einen Wechsel zwischen einer Einzelschaltung, Reihenschaltung oder Parallelschaltung der Heizkörper, um so variabel auf nutzungsbedingte Anforderungen, wie benötigte Leistung oder den Grad der Verschmutzung, reagieren zu können.

Die Heizkörper sind weiterhin an ihren jeweiligen Enden vorzugsweise abgewinkelt ausgestaltet, so dass diese vom Dampfrohr weg frei in den Raum ragen. Auf diese Weise lassen sich die elektrischen Anschlüsse ohne weiteres anbringen.

Weitere Vorteile und Merkmale ergeben sich aus den Unteransprüchen und der folgenden Zeichnungsbeschreibung. Dabei zeigt bzw. zeigen:
- Fig. 1: eine Seitenansicht einer erfindungsgemäßen Heizvorrichtung mit zwei Heizkörpern;
- Fig. 2: einen Querschnitt entsprechend der Linie A-A der Seitenansicht;
- Fig. 3: einen Querschnitt durch eine alternative Heizvorrichtung mit drei Heizkörpern;
- Fig. 4: einen Querschnitt durch eine alternative Heizvorrichtung mit vier Heizkörpern und einer zusätzlichen Innenverzahnung des Dampfrohres;
- Fig. 5u.6: zwei unterschiedliche Heizvorrichtungen mit im Querschnitt rechteckigen flüssigkeitsführenden Rohren;

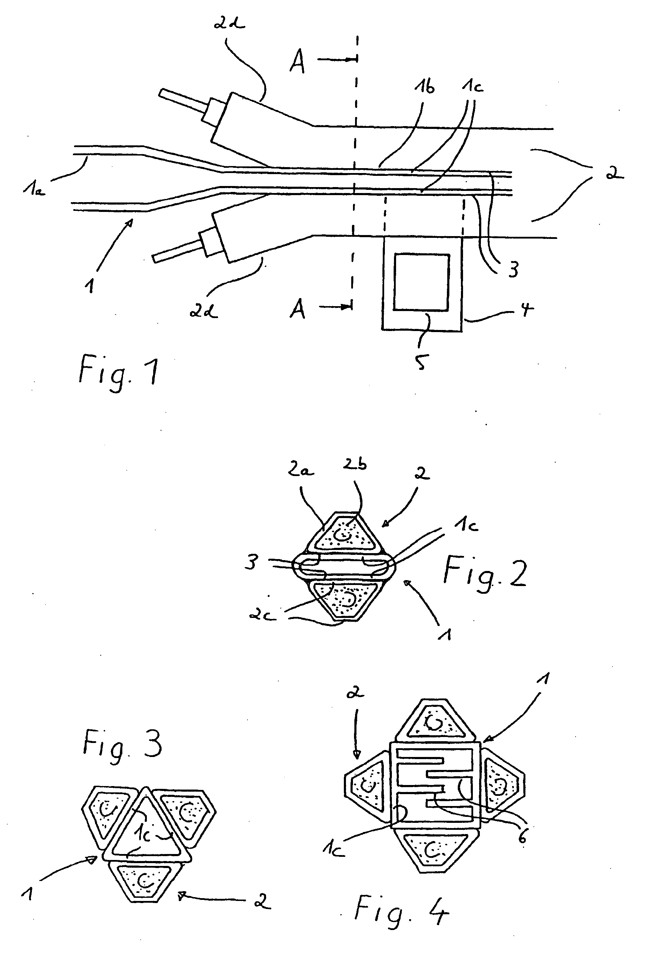

Figuren 1 und 2 zeigen eine erfindungsgemäße Heizvorrichtung mit z.B. einem Dampfrohr 1 aus Aluminiumlegierung, das an seinen beiden Enden einen kreisförmigen Querschnitt 1a aufweist, während es im mittleren Bereich 1b zu einem Flachrohr mit zwei im wesentlichen ebenen, parallelen Seitenwänden 1c verformt ist. Beidseitig ist auf diese ebenen Seitenwände 1c ein Heizkörper 2 mit Mantel 2a und Heizleiter 2b mit in diesem Bereich trapezförmigem Querschnitt unter Bildung im wesentlichen ebener Kontaktflächen 3 aufgelötet, wobei hier jeweils die längere der beiden Grundseiten 2c der Trapeze mit den flachen Seitenwänden 1c des Dampfrohres 1 verlötet ist. Die Heizkörper 2 sind an ihren beiden Enden 2d abgewinkelt und ragen hier frei in den Raum, um die elektrischen Anschlüsse ohne weiteres anbringen zu können. Über die elektrischen Anschlüsse sind die Heizkörper 2 in Reihe geschaltet. Denkbar wäre aber auch eine Parallelschaltung oder eine Beschaltung, die es erlaubt, zwischen Einzelschaltung, Reihenschaltung und Parallelschaltung zu wechseln, um so unterschiedliche Leistungsstufen zu erhalten. An den Enden 1a ist der ursprünglich kreisförmige Querschnitt der Heizkörper 2 noch erhalten. Im verlöteten Bereich 1b der Heizkörper 2 ist eine Lasche 4 für einen Temperaturregler 5 angelötet.

Figur 3 zeigt in Querschnitt ein Dampfrohr 1, dessen Querschnitt im wesentlichen die Form eines gleichseitigen Dreiecks aufweist. Jedes der drei geraden Seitenteile 1c ist dabei mit einem wiederum im Querschnitt trapezförmigen Heizkörper 2 verlötet. Die erfindungsgemäße Heizvorrichtung mit Dampfrohr 2 kann auch als Strangpressprofil hergestellt sein.

Figur 4 zeigt ein Dampfrohr 1, dessen Querschnitt im wesentlichen quadratisch ist. Jede der vier geraden Seitenwände 1c ist mit einem Heizkörper 2 verlötet. Auch hier kann das Dampfrohr 1 nur an zwei einander gegenüberliegenden Seiten mit je einem Heizkörper 2 verlötet sein. Weiterhin erhöhen hier Zwischenwandungen 6 des Dampfrohres 1 die Wärmeabgabefläche zum zu erhitzenden Medium. Zur Realisierung der Zwischenwandungen 6 ist das Dampfrohr 1 als Strangpressprofil ausgebildet.

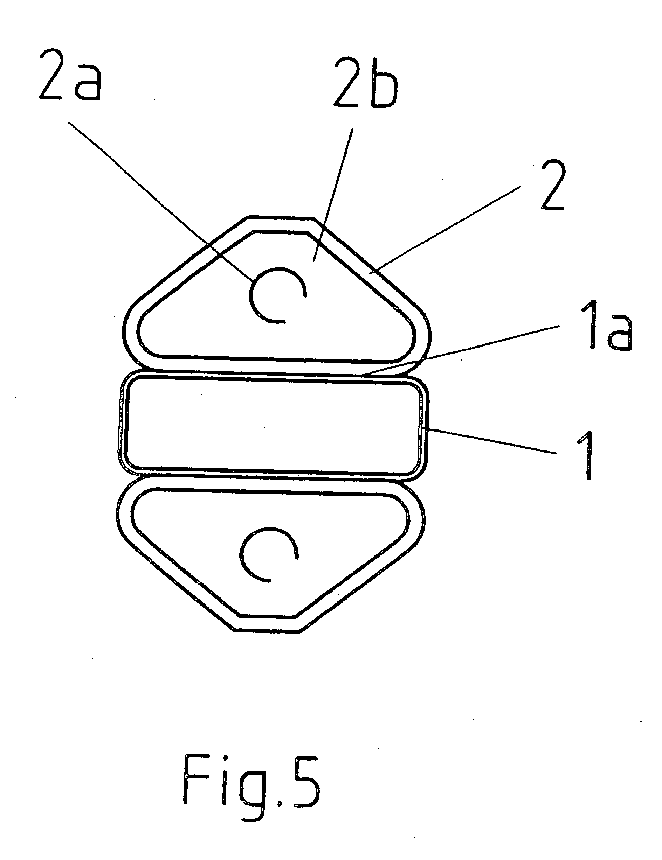

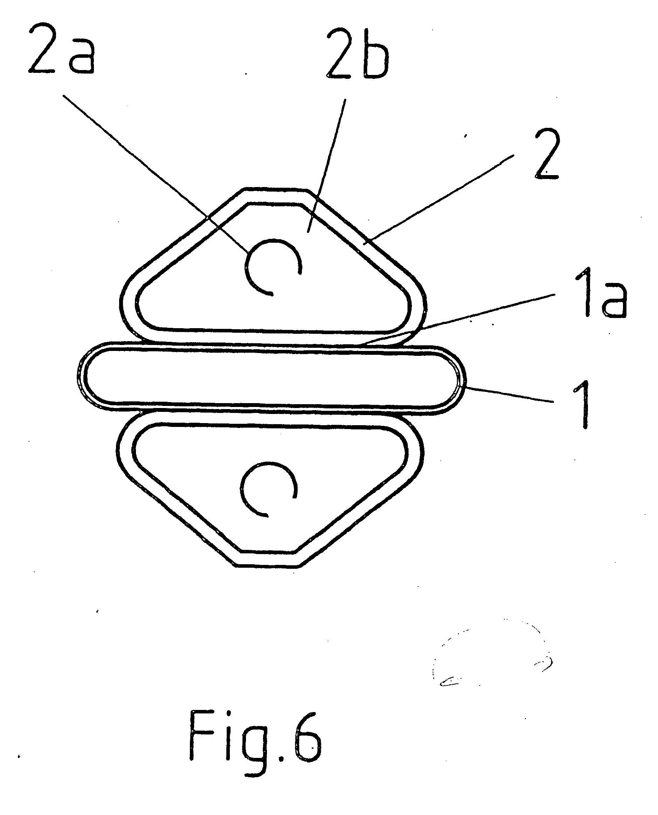

Die Figuren 5 und 6 zeigen etwa im Maßstab 1:5 Querschnitte von zwei erfindungsgemäßen Heizvorrichtungen.

Während bei den Ausgestaltungen der Figuren 5 und 6 der beheizte Umfangsbereich jeweils bei 30 mm bei einem Gesamtumfang von ca. 38 mm und damit das Verhältnis des beheizten Umfanges zu Gesamtumfang bei etwa 0,8 liegt, liegt das Verhältnis vom beheizten Umfang in mm zu dem Querschnitt in mm² bei der Ausgestaltung der Figur 5 bei 0,52, bei der Ausgestaltung der Figur 6 aber bei 0,78.

## Patentansprüche

1. Vorrichtung zum Erhitzen einer Flüssigkeit mit mindestens einem flüssigkeitsführenden Rohr (1) oder Dampfrohr und einer gut wärmeleitenden mit diesem verbundenen elektrischen Heizeinrichtung, wobei die Heizeinrichtung mindestens zwei Heizkörper (2) aufweist, die in gut wärmeleitender Verbindung mit dem mindestens einen flüssigkeitsführenden Rohr (1) oder Dampfrohr stehen, wobei die wärmeleitenden Verbindungen Lötverbindungen sind, und wobei die Heizkörper (2) und das flüssigkeitsführende Rohr (1) oder Dampfrohr Kontaktflächen mit einander angepassten Konturen aufweisen,
**dadurch gekennzeichnet,**
**dass** die Kontaktflächen (3) von Heizkörpern (2) und Rohr (1) im Wesentlichen eben ausgebildet sind, und
**dass** das Verhältnis von beheiztem Umfang zum gesamten Umfang des flüssigkeitsführenden Rohres (1) oder Dampfrohres größer als 0,6 ist.

2. Vorrichtung nach Anspruch 1, **dadurch gekennzeichnet, dass** die Heizkörper (2) als Rohrheizkörper ausgebildet sind.

3. Vorrichtung nach einem der vorangehenden Ansprüche, **dadurch gekennzeichnet, dass** mindestens zwei Heizkörper (2) gemeinsam mit einem Rohr (1) in direkter Verbindung stehen.

4. Vorrichtung nach Anspruch 3, **dadurch gekennzeichnet, dass** das Rohr (1) zumindest im Bereich der Kontaktflächen als Flachrohr ausgebildet ist.

5. Vorrichtung nach einem der Ansprüche 1 bis 3, **dadurch gekennzeichnet, dass** das Rohr (1) bei einer Verwendung von zwei oder drei Heizkörpern (2) zumindest im Bereich der Kontaktflächen (3) einen dreieckförmigen Querschnitt aufweist.

6. Vorrichtung nach einem der Ansprüche 1 bis 3, **dadurch gekennzeichnet, dass** das Rohr (1) bei einer Verwendung von zwei, drei oder vier Heizkörpern (2) zumindest im Bereich der Kontaktflächen (3) einen rechteckförmigen Querschnitt aufweist.

7. Vorrichtung nach einem der vorangehenden Ansprüche, **dadurch gekennzeichnet, dass** die Heizkörper (2) zumindest im Bereich der Kontaktflächen (3) einen trapezförmigen Querschnitt aufweisen.

8. Vorrichtung nach Anspruch 7, **dadurch gekennzeichnet, dass** die Heizkörper (2) über die längere der beiden Grundlinien des trapezförmigen Querschnitts mit dem flüssigkeitsführenden Rohr (1) oder Dampfrohr verbunden sind.

9. Vorrichtung nach einem der vorangehenden Ansprüche, **dadurch gekennzeichnet, dass** das Rohr (1) zumindest im Bereich der Kontaktflächen (3) eine durch Zwischenwandungen gebildete vergrößerte Wärmeabgabefläche aufweist.

10. Vorrichtung nach einem der vorangehenden Ansprüche, **dadurch gekennzeichnet, dass** das Rohr (1) als Strangpressprofil ausgebildet ist.

11. Vorrichtung nach einem der vorangehenden Ansprüche, **dadurch gekennzeichnet, dass** vor dem Rohr (1) eine Filtereinrichtung zur Verminderung eines Kalkgehalts des zur Dampferzeugung eingesetzten Wasser vorgesehen ist.

12. Vorrichtung nach einem der vorangehenden Ansprüche, **dadurch gekennzeichnet, dass** das Rohr (1) an seiner Innenseite eine Kalkablagerungen vermindernde Beschichtung aufweist.

13. Vorrichtung nach Anspruch 13, **dadurch gekennzeichnet, dass** die Beschichtung aus Polytetrafluorethylen (PTFE) besteht.

14. Vorrichtung nach einem der vorangehenden Ansprüche, **dadurch gekennzeichnet, dass** das flüssigkeitsführende Rohr (1) oder Dampfrohr und/oder die Heizkörperwandungen aus Aluminium oder einer Aluminiumlegierung bestehen.

15. Vorrichtung nach einem der vorangehenden Ansprüche, **dadurch gekennzeichnet, dass** eine Lasche (4) aus gut wärmeleitendem Material vorgesehen ist.

16. Vorrichtung nach Anspruch 15, **dadurch gekennzeichnet, dass** die Lasche (4) aus Aluminium oder einer Aluminiumlegierung besteht.

17. Vorrichtung nach Anspruch 15 oder 16, **dadurch gekennzeichnet, dass** die Lasche (4) im Bereich der Kontaktflächen (3) an die Heizkörper (2) und/oder das flüssigkeitsführende Rohr (1) oder Dampfrohr angelötet oder angeschweißt ist.

18. Vorrichtung nach einem der Ansprüche 15 bis 17, **dadurch gekennzeichnet, dass** an der Lasche (4) ein Temperaturregler (5) befestigt ist.

19. Vorrichtung nach einem der vorangehenden Ansprüche, **dadurch gekennzeichnet, dass** die Heizkörper (2) in Reihe geschaltet sind.

20. Vorrichtung nach einem der vorangehenden Ansprüche, **dadurch gekennzeichnet, dass** die Heizkörper (2) parallel geschaltet sind.

21. Vorrichtung nach einem der vorangehenden Ansprüche, **dadurch gekennzeichnet, dass** die Heizkörper (2) an mindestens einem ihrer Enden (2d) abgewinkelt sind und von der jeweiligen Kontaktfläche (3) weg frei in den Raum ragen.

22. Vorrichtung nach einem der vorangehenden Ansprüche, **dadurch gekennzeichnet, dass** Schaltmittel zum Umschalten zwischen einer Einzelschaltung, einer Reihenschaltung und einer Parallelschaltung der Heizkörper (2) vorhanden sind.

## Claims

1. An apparatus for heating a liquid having at least one liquid-conveying tube (1) or steam tube and a highly thermally conductive electrical heating device connected thereto, the heating device comprising at least two heating elements (2) which are in highly thermally conductive connection with the at least one liquid-conveying tube (1) or steam tube, the thermally conductive connections being brazed joints, and the heating elements (2) and the liquid-conveying tube (1) or steam tube comprising contact surfaces with outlines which are adapted to one another,
**characterised in that**
the contact surfaces (3) of heating elements (2) and tube (1) are of substantially planar form, and
the ratio of heated periphery to the entire periphery of the liquid-conveying tube (1) or steam tube is greater than 0.6.

2. An apparatus according to claim 1, **characterised in that** the heating elements (2) take the form of tubular heating elements.

3. An apparatus according to either one of the preceding claims, **characterised in that** at least two heating elements (2) are jointly in direct connection with one tube (1).

4. An apparatus according to claim 3, **characterised in that**, at least in the area of the contact surface (3), the tube (1) takes the form of a flat tube.

5. An apparatus according to any one of claims 1 to 3, **characterised in that**, when two or three heating elements (2) are used, the tube (1) has a triangular cross-section at least in the area of the contact surfaces (3).

6. An apparatus according to any one of claims 1 to 3, **characterised in that**, when two, three or four heating elements (2) are used, the tube (1) has a rectangular cross-section at least in the area of the contact surfaces (3).

7. An apparatus according to any one of the preceding claims, **characterised in that**, at least in the area of the contact surfaces (3), the heating elements (2) have a trapezoidal cross-section.

8. An apparatus according to claim 7, **characterised in that** the heating elements (2) are connected with the liquid-conveying tube (1) or steam tube over the longer of the two baselines of the trapezoidal cross-section.

9. An apparatus according to any one of the preceding claims, **characterised in that**, at least in the area of the contact surfaces (3), the tube (1) has an enlarged heat-releasing surface formed by partition walls.

10. An apparatus according to any one of the preceding claims, **characterised in that** the tube (1) takes the form of an extruded profile.

11. An apparatus according to any one of the preceding claims, **characterised in that** a filter device for reducing lime content in the water used for steam production is provided upstream of the tube (1).

12. An apparatus according to any one of the preceding claims, **characterised in that** the tube (1) comprises a lime deposit-reducing coating on the interior thereof.

13. An apparatus according to claim 13, **characterised in that** the coating consists of polytetrafluoroethylene (PTFE).

14. An apparatus according to any one of the preceding claims, **characterised in that** the liquid-conveying tube (1) or steam tube and/or the heating element walls consist of aluminium or an aluminium alloy.

15. An apparatus according to any one of the preceding claims, **characterised in that** a tab (4) of highly thermally conductive material is provided.

16. An apparatus according to claim 15, **characterised in that** the tab (4) consists of aluminium or an aluminium alloy.

17. An apparatus according to claim 15 or claim 16, **characterised in that** the tab (4) is brazed or welded onto the heating elements (2) and/or the liquid-conveying tube (1) or steam tube in the area of the contact surfaces (3).

18. An apparatus according to any one of claims 15 to 17, **characterised in that** a thermostat (5) is attached to the tab (4).

19. An apparatus according to any one of the preceding claims, **characterised in that** the heating elements (2) are connected in series.

20. An apparatus according to any one of the preceding claims, **characterised in that** the heating elements (2) are connected in parallel.

21. An apparatus according to any one of the preceding claims, **characterised in that** the heating elements (2) are bent at at least one of the ends (2d) thereof and protrude freely into space away from the respective contact surface (3).

22. An apparatus according to any one of the preceding claims, **characterised in that** switching means are present for switching between independent, series and parallel connection of the heating elements (2).

## Revendications

1. Dispositif pour chauffer un liquide comprenant au moins un conduit transporteur de liquide (1) ou conduit de vapeur et une installation de chauffage électrique raccordée audit conduit de manière à bien conduire la chaleur, l'installation de chauffage comprenant au moins deux radiateurs (2), lesquels sont raccordés par un assemblage bien thermoconducteur à au moins un conduit transporteur de liquide (1) ou conduit de vapeur, les assemblages thermoconducteurs étant des liaisons soudées, les radiateurs (2) et le conduit transporteur de liquide (1) ou conduit de vapeur présentent des surfaces de contact dont les contours s'épousent mutuellement,
**caractérisé en ce que**
les les surfaces de contact (3) des radiateurs (2) et du conduit (1) sont essentiellement planes,
le rapport entre la circonférence chauffée et la circonférence totale du conduit transporteur de liquide (1) ou conduit de vapeur étant supérieur à 0,6.

2. Dispositif selon la revendication 1, **caractérisé en ce que** les radiateurs (2) se présentent sous la forme de radiateurs tubulaires.

3. Dispositif selon une des revendications qui précèdent, **caractérisé en ce qu'**au moins deux radiateurs (2) sont raccordés ensemble directement à un conduit (1).

4. Dispositif selon la revendication 3, **caractérisé en ce que** le conduit (1) est aplati au moins au niveau de la surface de contact (3).

5. Dispositif selon une des revendications 1 à 3, **caractérisé en ce que** le conduit (1) présente une section de forme triangulaire au moins au niveau des surfaces de contact (3) quand deux ou trois radiateurs (2) sont utilisés.

6. Dispositif selon une des revendications 1 à 3, **caractérisé en ce que** le conduit (1) présente une section de forme rectangulaire au moins au niveau des surfaces de contact (3) quand deux, trois ou quatre radiateurs (2) sont utilisés.

7. Dispositif selon une des revendications qui précèdent, **caractérisé en ce que** les radiateurs (2) présentent une section trapézoïdale au moins au niveau des surfaces de contact (3).

8. Dispositif selon la revendication 7, **caractérisé en ce que** les radiateurs (2) sont raccordés au conduit transporteur de liquide (1) ou conduit de vapeur par l'intermédiaire de la plus longue des deux bases de la section trapézoïdale.

9. Dispositif selon une des revendications qui précèdent, **caractérisé en ce que** le conduit (1) présente une surface dégageant de la chaleur formée et agrandie par des cloisons intermédiaires au moins au niveau des surfaces de contact (3).

10. Dispositif selon une des revendications qui précèdent, **caractérisé en ce que** le conduit (1) est formé par un profilé filé.

11. Dispositif selon une des revendications qui précèdent, **caractérisé en ce qu'**en amont du conduit (1) est prévu un dispositif de filtration pour réduire le taux de calcaire contenu dans l'eau employée pour générer la vapeur.

12. Dispositif selon une des revendications qui précédent, **caractérisé en ce que** le conduit (1) présente sur sa face intérieure un revêtement destiné à réduire les dépôts de calcaire.

13. Dispositif selon la revendication 12, **caractérisé en ce que** le revêtement est formé en polytétrafluoroéthylène (PTFE).

14. Dispositif selon une des revendications qui précédent, **caractérisé en ce que** le conduit transporteur de liquide (1) ou conduit de vapeur et/ou les parois des radiateurs sont en aluminium ou en alliage d'aluminium.

15. Dispositif selon une des revendications qui précèdent, **caractérisé en ce qu'**est prévue une attache (4) en un matériau bon conducteur de chaleur.

16. Dispositif selon la revendication 15, **caractérisé en ce que** l'attache (4) est en aluminium ou en alliage d'aluminium.

17. Dispositif selon la revendication 15 ou 16, caractérisé en que l'attache (4) est brasée ou soudée au niveau des surfaces de contact (3) aux radiateurs (2) et/ou au conduit transporteur de liquide (1) ou conduit de vapeur.

18. Dispositif selon une des revendications 15 à 17, **caractérisé en ce qu'**un thermostat (5) est fixé à l'attache (4).

19. Dispositif selon une des revendications qui précèdent, **caractérisé en ce que** les radiateurs (2) sont couplés en série.

20. Dispositif selon une des revendications qui précèdent, **caractérisé en ce que** les radiateurs (2) sont couplés en parallèle.

21. Dispositif selon une des revendications qui précèdent, **caractérisé en ce que** les radiateurs (2) sont pliés à au moins une de leurs extrémités (2d) qui pointe librement dans l'espace en s'écartant des surfaces de contact respectives (3).

22. Dispositif selon une des revendications qui précèdent, **caractérisé en ce que** sont prévus des dispositifs de commutation pour commuter entre le couplage séparé, le couplage en série et le couplage en parallèle des radiateurs (2).
